# FASCICULE DE BREVET EUROPEEN

(11) **EP 3 792 153 B1**
(45) Date de publication et mention de la délivrance du brevet: **24.01.2024**
(21) Numéro de dépôt: 20184557.5
(22) Date de dépôt: 07.07.2020
(51) Int. Cl.: B62D 21/15, B62D 43/04

(54) **VÉHICULE DOTÉ D'UN DÉFLECTEUR**
FAHRZEUG MIT EINER DEFLEKTORVORRICHTUNG
VEHICLE PROVIDED WITH A DEFLECTOR

(30) Priorité: 11.09.2019 FR 1910023
(43) Date de publication de la demande: 17.03.2021
(73) Titulaire: Renault s.a.s, 92100 Boulogne Billancourt (FR)
(72) Inventeur: LAFFITE, Pascal, 78210 Saint-Cyr-l'Ecole (FR); LUTTON, Philippe, 92270 Bois Colombes (FR)
(74) Mandataire: Renault Group

(56) Documents cités:
- FR-A- 1 448 214
- FR-A1- 2 870 199
- JP-A- H0 616 114
- JP-A- 2013 216 206
- JP-U- S5 945 156

## Description

La présente invention concerne les déflecteurs pour dévier la trajectoire d'une roue de secours projetée sous l'effet d'un choc et initialement fixée sous le plancher d'un véhicule automobile et un véhicule automobile comprenant un tel déflecteur.

Généralement, un véhicule automobile comprend une roue de secours qui est logée sous le plancher du véhicule, entre l'extrémité arrière du véhicule par rapport au sens normal de marche du véhicule et l'essieu arrière du véhicule.

En outre, généralement, le réservoir de carburant du véhicule est situé sous le plancher du véhicule, à proximité de l'essieu arrière et de la roue de secours, la roue de secours étant maintenue dans un panier en fil ou par un système de treuil.

Cependant, lors d'un choc arrière avec une quantité de mouvement importante, la roue de secours peut être projetée contre le réservoir de carburant, et le perforer.

Le document FR 2 870 199 illustre une unité arrière d'un véhicule automobile comprenant un déflecteur soudé sur la traverse centrale arrière du véhicule pour que la trajectoire de la roue de secours, libérée après un choc sur le véhicule ne rencontre pas le réservoir.

Le déflecteur est formé d'un profilé s'étendant longitudinalement et de section sensiblement rectangulaire.

Cependant, comme le déflecteur est soudé sur la traverse centrale arrière, il n'est pas démontable.

Le document JP 2013 216206 A décrit également un véhicule automobile comprenant un plancher, une roue de secours, un réservoir de carburant fixé sur des longerons solidaires du plancher et un déflecteur, le déflecteur étant situé entre la roue de secours et le réservoir de carburant, ce déflecteur étant configuré pour dévier la roue de secours vers la chaussée lors d'un choc arrière subi par le véhicule.

Suite à l'évolution de contraintes réglementaires, la zone entre la roue de secours et le réservoir est encombrée par notamment des dispositifs antipollution. La taille du déflecteur est telle qu'il n'est plus intégrable dans cette zone.

En outre, lors de la fabrication du véhicule, tous les éléments de la sous-caisse du véhicule, notamment le moteur, le train avant, le train arrière, le système de post-traitement des effluents gazeux, le réservoir de carburant sont vissés dans une même étape de fabrication par des visseuses automatiques. Le déflecteur soudé n'est pas compatible avec ce mode d'assemblage en grande série.

On connaît également le document FR 1 448 214 A qui décrit une structure rigide située sous un plancher de véhicule automobile, cette structure rigide supportant la roue de secours et ayant un bras latéral situé entre la roue et un réservoir de carburant disposé sous le plancher du véhicule.

Le but de l'invention est de pallier tout ou partie de ces inconvénients.

Au vu de ce qui précède, l'invention propose un véhicule automobile comprenant sous son plancher une roue de secours, un réservoir de carburant fixé sur des longerons solidaires du plancher et un déflecteur, le déflecteur étant situé entre la roue de secours et le réservoir de carburant, le déflecteur étant fixé aux longerons du véhicule, ce déflecteur étant en outre configuré pour dévier la roue de secours vers la chaussée de manière à éviter que la roue de secours perfore le réservoir de carburant, et vers la partie centrale d'un essieu du véhicule situé entre le réservoir et la chaussée, lors d'un choc arrière subi par le véhicule, le déflecteur comprenant un tube cintré dont deux extrémités sont fixées aux longerons par des moyens de fixation démontables.

Avantageusement, le déflecteur est réalisé en un acier à haute limite élastique.

De préférence, les deux extrémités du tube cintré sont reliées par une partie centrale, les deux extrémités étant destinées à être reliées au plancher, la partie centrale étant contenue dans un premier plan formant un angle avec un deuxième plan contenant les deux extrémités, la valeur et l'orientation de l'angle étant déterminées de sorte que lors du choc, la roue de secours soit déviée vers la chaussée.

De préférence, les moyens de fixation comprennent à chaque extrémité du tube cintré une tôle de fixation pliée sensiblement en forme de L pour former deux branches, une première branche étant destinée à être fixée de manière démontable au plancher, et la deuxième branche étant solidaire du tube cintré.

Selon l'invention, le déflecteur est en outre configuré pour projeter la roue de secours vers la partie centrale d'un essieu du véhicule situé entre le réservoir et la chaussée.

Avantageusement, le déflecteur est fixé aux longerons du véhicule.

D'autres buts, caractéristiques et avantages de l'invention apparaîtront à la lecture de la description suivante, donnée uniquement à titre d'exemple non limitatif, et faite en référence aux dessins annexés sur lesquels :

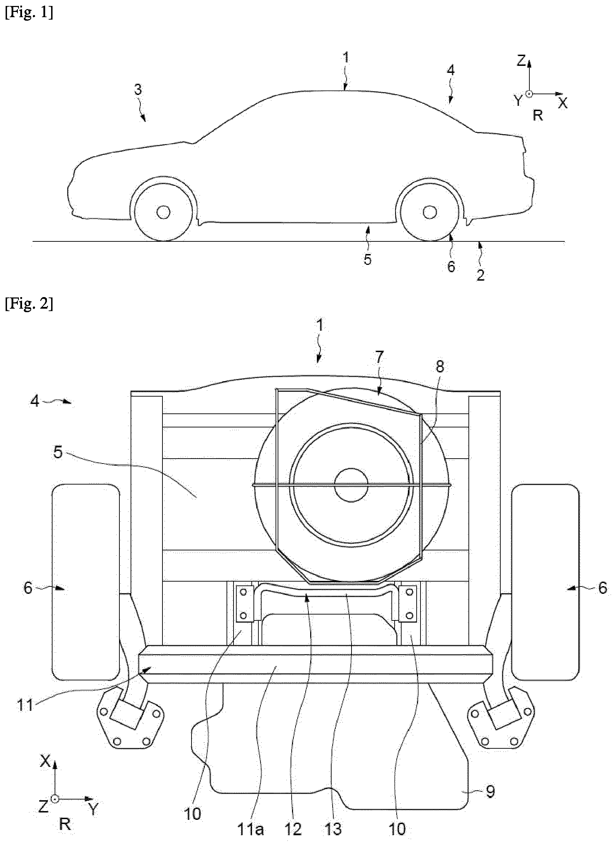

[Fig 1] illustre un exemple d'un véhicule automobile selon l'invention ;
[Fig 2]
[Fig 3] illustrent des vues du dessous du plancher du véhicule automobile selon l'invention ; et
[Fig 4] illustre un exemple d'un déflecteur selon l'invention.

On se réfère à la figure 1 qui illustre un véhicule automobile 1 évoluant sur une chaussée 2.

Le véhicule 1 comprend une partie avant 3 et une partie arrière 4, en considérant la direction normale de roulage du véhicule 1.

Soit R(X, Y, Z) un repère orthonormé direct dans lequel l'axe X est orienté selon une direction longitudinale des parties avant-arrière du véhicule 1, l'axe Y est orienté selon une direction transversale du véhicule 1, et l'axe Z est orienté selon une direction parallèle à une droite reliant la chaussée 2 et le toit du véhicule 1.

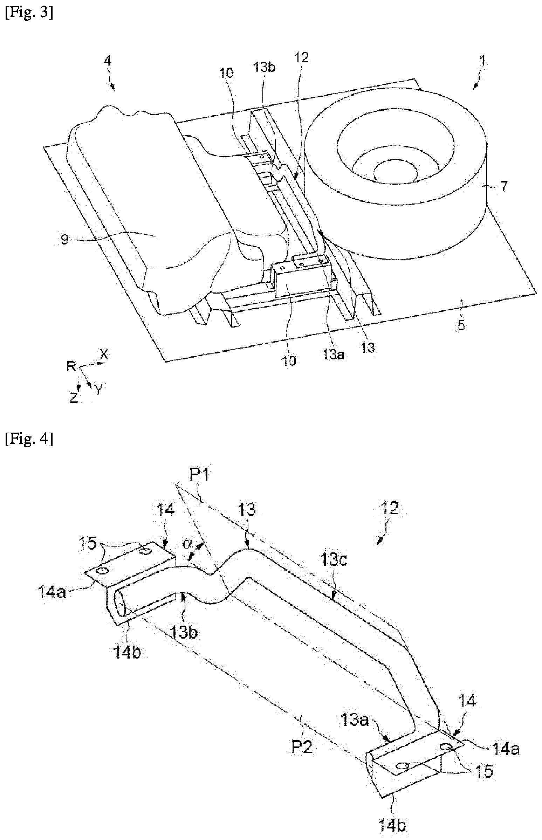

Les figures 2 et 3 représentent des vues du dessous du plancher 5 de la partie arrière 4 du véhicule 1, c'est-à-dire une vue depuis la chaussée 2 orientée selon l'axe Z, sur lesquels les roues arrière 6 du véhicule sont visibles.

Une roue de secours 7 du véhicule 1 est située à l'extrémité libre de la partie arrière 4.

La roue de secours 7 est maintenue sur le bas du plancher 5 par un panier en fil 8.

En variante, la roue de secours 7 peut être maintenue sur le bas du plancher 5 par un système de treuil.

Un réservoir de carburant 9 est fixé sur des longerons 10 solidaires du plancher 5 en amont de la roue de secours 7 en considérant l'axe orienté X.

Un essieu arrière 11 auquel sont reliés les roues arrière 6 recouvre partiellement le réservoir 9 dans un plan contenant les axes X et Y.

La partie arrière 4 comprend en outre un déflecteur 12 fixé sous le plancher entre la roue de secours 7 et le réservoir de carburant 9.

Le déflecteur 12 est configuré pour que, lors d'un choc subi par le véhicule 1, le déflecteur 12 dévie la roue de secours 7, projetée sous l'effet du choc, vers la chaussée 2 de manière à éviter que la roue de secours 7 heurte et, le cas échéant perfore, le réservoir de carburant.

On considère que le réservoir 9 n'est pas susceptible d'être perforé si le choc sur le réservoir 9 n'entraîne pas une déformation plastique supérieure à 12% du réservoir 9.

Le déflecteur 12 comprend un tube cintré 13, par exemple un tube rond cintré ne présente aucune arrête susceptible de perforer le réservoir 9.

Le train arrière 11 comprend une partie massive 11a reliant les deux roues 6 et recouvrant partiellement le réservoir 9.

La partie massive 11a est située entre la chaussée 2 et le réservoir 9.

Afin de protéger le réservoir 9 lors du choc, le déflecteur 12 peut en outre être configuré pour dévier la roue de secours 7 vers la partie centrale 11a.

Des extrémités 13a et 13b du tube cintré 13 comprennent des moyens de fixation configurés pour fixer le déflecteur 13 aux longerons 10 du véhicule.

Les moyens de fixation peuvent être démontables.

On se réfère à la figure 4 qui illustre un exemple de mode de réalisation d'un déflecteur 12.

On retrouve le tube cintré 13 comprenant les deux extrémités 13a et 13b.

Le tube 13 comprend en outre une partie centrale 13c reliant les deux extrémités 13a et 13b.

La partie centrale 13c est contenue dans un premier plan P1 formant un angle α avec un deuxième plan P2 contenant les deux extrémités 13a et 13b.

La valeur et l'orientation de l'angle α sont déterminées de sorte que lors du choc, la roue de secours 7 soit déviée vers la chaussée 2.

La forme cintrée du tube 13 et l'angle α permettent au tube 13 de se déformer sous l'impact de la roue de secours 7 de manière à former un « tremplin » pour la roue de secours 7 pour par exemple diriger la roue de secours 7 vers la partie centrale 11a du train arrière 11, et de se déformer de manière élastique sous l'effet du choc.

Le tube cintré 13 est réalisé par exemple en un acier à haute limite élastique de sorte que le tube cintré 13 subisse une déformation élastique sous l'effet du choc sans rentrer dans le domaine de plastification dudit acier, et ainsi ne se rompt pas.

Le tube cintré 13 peut par exemple être symétrique par rapport à un plan médian de la partie centrale 13c.

Les moyens de fixation peuvent comprendre à chaque extrémité 13a, 13b du tube cintré 13 une tôle de fixation 14 pliée sensiblement en forme de L pour former deux branches 14a et 14b.

Une première branche 14a est fixée de manière démontable à l'un des longerons 10, et la deuxième branche 14b est solidaire du tube 12.

Par exemple, la première branche 14a comprend des trous 15 accueillant des vis en prise dans le longeron 10.

Comme le déflecteur 12 est monté de manière démontable sur le véhicule 1, il est facilement remplaçable en cas de détérioration.

De plus, le déflecteur 12 rapporté sous le plancher 5 par des vis permet d'intégrer le montage du déflecteur 12 dans le mode de production de grande série du véhicule 1.

En outre, le déflecteur 12 comprenant le tube cintré 13 est simple à réaliser et permet de réduire l'encombrement pris par le déflecteur 12 entre la roue de secours 7 et le réservoir 9.

Bien entendu, selon le positionnement du réservoir de carburant 9 et de la roue de secours 7, le déflecteur est configuré pour dévier la roue de secours 7 vers l'essieu avant sous l'effet d'un choc.

## Revendications

1. Véhicule automobile (1) comprenant sous son plancher (5) une roue de secours (7), un réservoir (9) de carburant fixé sur des longerons (10) solidaires du plancher (5) et un déflecteur (12), le déflecteur étant situé entre la roue de secours (7) et le réservoir (9) de carburant, le déflecteur (12) étant fixé aux longerons (10) du véhicule, ce déflecteur étant en outre configuré pour dévier la roue de secours (7) vers la chaussée de manière à éviter que la roue de secours perfore le réservoir (9) de carburant, et vers la partie centrale (11a) d'un essieu (11) du véhicule situé entre le réservoir et la chaussée, lors d'un choc arrière subi par le véhicule, le déflecteur comprenant un tube cintré (13) dont deux extrémités (13a, 13b) sont fixées aux longerons par des moyens de fixation démontables.

2. Véhicule automobile (1) selon la revendication 1, réalisé en un acier à haute limite élastique.

3. Véhicule automobile (1) selon la revendication 1 ou 2, dans lequel les deux extrémités(13a, 13b) du tube cintré (13) sont reliées par une partie centrale (13c), les deux extrémités étant destinées à être reliées au plancher (5), la partie centrale étant contenue dans un premier plan (P1) formant un angle (α) avec un deuxième plan (P2) contenant les deux extrémités, la valeur et l'orientation de l'angle étant déterminées de sorte que lors du choc, la roue de secours soit déviée vers la chaussée (2).

4. Véhicule automobile (1) selon l'une quelconque des revendications précédentes, dans lequel les moyens de fixation comprennent à chaque extrémité (13a, 13b) du tube cintré (13) une tôle de fixation (14) pliée sensiblement en forme de L pour former deux branches (14a, 14b), une première branche (14a) étant destinée à être fixée de manière démontable au plancher (5), et la deuxième branche (14b) étant solidaire du tube cintré.

## Patentansprüche

1. Kraftfahrzeug (1), das unter seinem Boden (5) ein Reserverrad (7), einen Kraftstofftank (9), der an mit dem Boden (5) fest verbundenen Längsträgersn (10) befestigt ist, und einen Deflektor beinhaltet, wobei sich der Deflektor zwischen dem Reserverad (7) und dem Kraftstofftank (9) befindet, wobei der Deflektor (12) an den Längsträgern (10) des Fahrzeugs befestigt ist, wobei dieser Deflektor ferner dazu konfiguriert ist, das Reserverad (7) im Fall eines durch das Fahrzeug erlittenen Heckaufpralls zu der Fahrbahn hin abzulenken, um zu verhindern, dass das Reserverad den Kraftstofftank (9) durchbohrt, und zu dem Mittelteil (11a) einer Achse (11) des Fahrzeugs abzulenken, die sich zwischen dem Tank und der Fahrbahn befindet, wobei der Deflektor ein gebogenes Rohr (13) beinhaltet, dessen zwei Enden (13a, 13b) durch demontierbare Befestigungsmittel an den Längsträgern befestigt sind.

2. Kraftfahrzeug (1) nach Anspruch 1, das aus einem Stahl mit hoher Elastizitätsgrenze hergestellt ist.

3. Kraftfahrzeug (1) nach Anspruch 1 oder 2, wobei die zwei Enden (13a, 13b) des gebogenen Rohrs (13) durch einen Mittelteil (13c) verbunden sind, wobei die zwei Enden dazu bestimmt sind, mit dem Boden verbunden zu sein, wobei der Mittelteil in einer ersten Ebene (P1) enthalten ist, die mit einer zweiten Ebene (P2), die die zwei Enden enthält, einen Winkel (α) bildet, wobei der Wert und die Ausrichtung des Winkels so bestimmt sind, dass das Reserverad bei einem Aufprall zu der Fahrbahn hin abgelenkt wird.

4. Kraftfahrzeug (1) nach einem beliebigen der vorhergehenden Ansprüche, wobei die Befestigungsmittel an jedem Ende (13a, 13b) des gebogenen Rohrs (13) ein Befestigungsbelch (14) beinhalten, das im Wesentlichen L-förmig gefaltet ist, um zwei Arme (14a, 14b) zu bilden, wobei ein erster Arm (14a) dazu bestimmt ist, demontierbar an dem Boden (5) befestigt zu sein, und der Arm Arm (14b) fest mit dem gebogenen Rohr verbunden ist.

## Claims

1. Motor vehicle (1) comprising, beneath its floor (5), a spare wheel (7), a fuel tank (9) fastened to longitudinal members (10) secured to the floor (5), and a deflector (12), the deflector being situated between the spare wheel (7) and the fuel tank (9), the deflector (12) being fastened to the longitudinal members (10) of the vehicle, this deflector also being configured to deflect the spare wheel (7) towards the roadway so as to prevent the spare wheel from perforating the fuel tank (9), and towards the central part (11a) of an axle (11) of the vehicle that is situated between the tank and the roadway, during a rear impact experienced by the vehicle, the deflector comprising a bent tube (13) of which two ends (13a, 13b) are fastened to the longitudinal members by removable fastening means.

2. Motor vehicle (1) according to Claim 1, which is made of a high yield strength steel.

3. Motor vehicle (1) according to Claim 1 or 2, wherein the two ends (13a, 13b) of the bent tube (13) are connected by a central part (13c), the two ends being intended to be connected to the floor (5), the central part being contained within a first plane (P1) forming an angle (α) with a second plane (P2) containing the two ends, the value and the orientation of the angle being determined such that, during the impact, the spare wheel is deflected towards the roadway (2).

4. Motor vehicle (1) according to any one of the preceding claims, wherein the fastening means comprise, at each end (13a, 13b) of the bent tube (13), a fastening plate (14) which is folded substantially in an L shape to form two branches (14a, 14b), a first branch (14a) being intended to be removably fastened to the floor (5), and the second branch (14b) being secured to the bent tube.
